Europäisches Patentamt

European Patent Office

Office européen des brevets

(11) Publication number: **0 124 258**
**A2**

(12) **EUROPEAN PATENT APPLICATION**

(21) Application number: **84302106.4**

(22) Date of filing: **28.03.84**

(51) Int. Cl.³: **G 01 M 17/00**

(30) Priority: **29.03.83 BE 210425**

(43) Date of publication of application: **07.11.84**
**Bulletin 84/45**

(84) Designated Contracting States: **AT BE CH DE FR GB IT LI LU NL SE**

(71) Applicant: **Lambrecht, Willy, B-9120 Destelbergen (BE)**

(72) Inventor: **Lambrecht, Willy, B-9120 Destelbergen (BE)**

(74) Representative: **Hillier, Peter et al, Guest Keen and Nettlefolds plc Group Patents and Licensing Department P.O. Box 55 Ipsley House Ipsley Church Lane, Redditch Worcestershire B98 0TL (GB)**

(54) **Vehicle test method and apparatus.**

(57) Test method and apparatus for vehicle wheels and suspensions comprising a pair of rollers (AB) for each wheel, the rollers being movable axially in concert or independently of each other and also towards and away from each other, at right angles to their axes. A third roller (C) is axially displaceable by a tyre to measure play in the wheel mounting.

EP 0 124 258 A2

P84.026

## VEHICLE TEST METHOD AND APPARATUS

The invention relates to a test method and apparatus for the detection of slackness between and mis-alignment of parts of a vehicle including one or more of the vehicle wheels and parts directly or indirectly connected thereto.

The visual determination of the slackness or "play" which can occur between two components has always been important in the safety inspection of vehicles. Conditions of abnormal wear or mis-alignment can lead to improper operation of vehicle systems which may make the vehicle uncontrolable. Clearances between components which constitute excessive play and which are considered un-safe are clearances which exceed the manufacturers tolerances. A purely visual observation of clearances is naturally dependant on professional experience, and is thus somewhat subjective.

The basis either for visual inspection of steering and suspension components of the vehicles is principally a comparison of the observed (ie. actual) clearances with the clearance between identical parts in a reliable and sound state (ie. a "test" or "specified" clearance).

When two parts are assembled (for example by means of a screw received in a tapped bore), one part will move in response to the displacement of the other part. This displacement occurs in a plane determined by the direction of magnitute of a displacing force. It follows that any slackness in the assembly will appear at a region away from where the parts are touching. Slackness is apparent when the direction of the force applied to one component changes, resulting in a lack of corresponding movement in the other component. This sympton indicates a state of wear and for the observation of the slackness caused by this wear the frequency and amplitude of the varying exertion of the force is consequently of importance. The observation of the slackness is possible when a varying "activating" force acts on the parts to be inspected.

The invention provides a method of testing or inspecting vehicle wheels and elements of the vehicle directly or indirectly linked to said wheels, characterised by the steps of turning a wheel of a vehicle to be tested whilst moving a base region of the wheel in a direction substantially parallel to the axis of rotation of the wheel and/or a direction at right angles to the said axis and observing the effect of said movement on said wheel and/or on said element(s) to detect wear or misalignment.

Preferably the wheel rests on and is rotated by a roller and said movement is carried out by moving the said roller in at least one of the said directions.

The invention also provides therefore test apparatus for use in the above method the apparatus being characterised by roller means including at least one roller, the roller means being operable to turn at least one wheel of a vehicle under test and means for moving at least a part of said roller means in at least one direction transversely and/or longitudinally of the axis of rotation of said roller.

The apparatus may comprise a pair of assemblies, an assembly being provided for respective opposed wheels at each side of a vehicle. Each assembly is preferably arranged to be utilised either independently or the assemblies may be utilised in conjunction with each other. Each assembly preferably includes a pair of rollers rotatable about axes which are substantially parallel to each other and generally parallel to the axis of rotation of wheel under test, one of the rollers being rotatable by drive means. The drive means may be a fluid powered or electrically powered motor preferably an electro-hydraulic motor.

The rollers are preferably each mounted on a respective first sliding member, the sliding member for the drivable roller also mounting the drive means for that roller. The first sliding members are preferably mounted on respective second sliding members preferably either the first sliding members or the second sliding members are slidable in a direction parallel to the axis of rotation of the drive roller the other of the first or second sliding members being movable in a direction at right angles to the said axis. Preferably the first sliding members are movable in a direction axially of or parallel to the axis of the driven roller by respective fluid powered rams fixedly mounted on said second sliding members.

The second sliding members are desirably arranged to be movable towards and away from each other in a direction substantially at right angles to the axis of rotation of the drivable roller. The second sliding members may be arranged to be movable towards and away from each other by at least one fluid powered ram desirably via a rack and pinion arrangement.

The fluid powered rams are desirably hydraulic rams, and at least one of the fluid powered rams and the fluid powered motor are desirably actuated by fluid governed by valves under the control of a programmable electronic device, such as a microprocessor or a computer.

The programmable electronic device preferably includes control means operable by a user of the apparatus and by which one or more programs comprising sequences of operation of at least some of the said fluid powered rams and motor may be selectively activated the sequences being controlled by instructions and/or data stored in a memory forming part of the electronic device. Desirably at least one of the said sequences of operation includes provision for cyclic operation of one or more of the fluid powered rams or motor.

Reaction means are preferably provided for measuring the resistance to rotation of a wheel by the drivable roller, for example when the vehicle brakes are applied. The reaction means may be a device which measures the pressure of the working fluid supplying the drive means to the roller. The working fluid may be oil, air or where the motor is electric, electrical current.

A third roller is preferably provided for each assembly and is rotatable about an axis substantially parallel to that of the drivable roller, the third roller being axially displacable and arranged so as to contact a part of a tyre contacting in use the first and second rollers. Indicator means are preferably provided for indicating the degree of axial displacement of the third roller from a given point. The said indicator means may include a pair of springs for centering the third roller in an axial direction under normal circumstances and an electrical cuicuit whose resistance is arranged to vary proportionally with respect to said axial displacement. The third roller may be arranged so as to be selectively disengagable from contact with a tyre.

The apparatus according to the invention generally has two inspection functions, firstly a measuring function using certain measuring instruments or tools to obtain information about transverse forces exerted by wheels on an axle, as well as to measure braking forces. Secondly a mechanical function permitting the inspection of suspension and steering elements as well chassis parts with a view to assessing their state for example the presence of absence of fractures or cracks, fixing and wear.

An embodiment of the invention will now be described by way of example only and with reference to the accompanying drawings, in which:

Figure 1 is a perspective view of apparatus according to the invention,

Figure 2 is a perspective view of a portion of the apparatus shown in Fig 1 on an enlarged scale,

Figure 3 is a schematic diagram of an electrohydraulic unit for use in controlling the apparatus of Figs 1 and 2,

Figure 4 is a schematic diagram of a remote control device for use with the apparatus, and

Figures 5 to 12 inclusive are diagrammatic representations showing different applications of the apparatus.

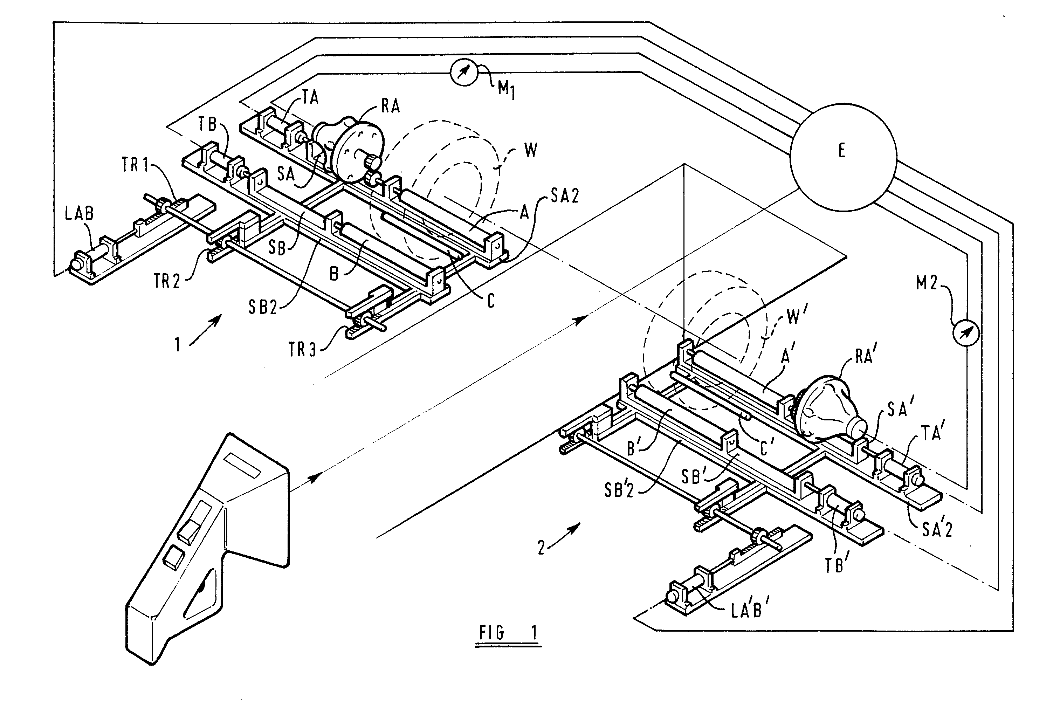

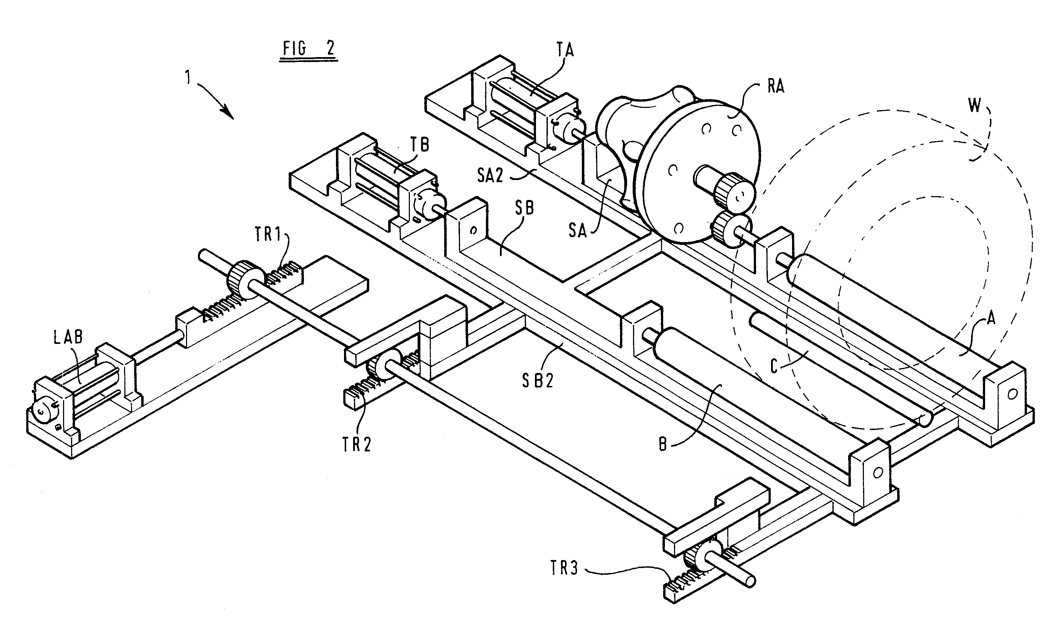

The apparatus shown in figure 1, comprises two substantially similar assemblies 1, 2. Assembly 1 being shown in figure 2 on an enlarged scale. The latter will be described and it will be readily apparent that the same description is applicable to assembly 2, the opposite hand of the assembly being taken into account. The reference letters and numerals used in relation to assembly 1 have been used with superscripts in relation to assembly 2.

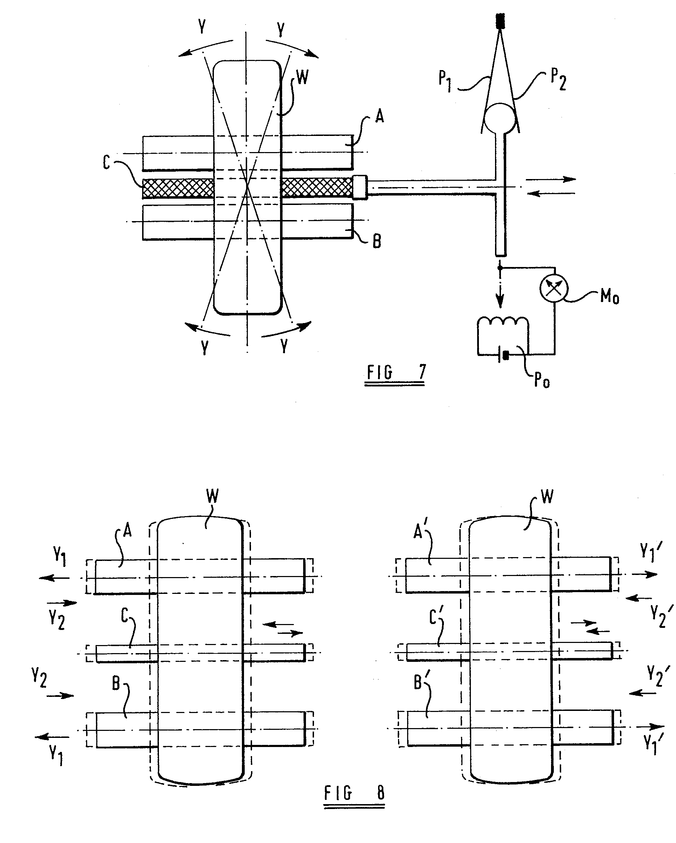

Each assembly comprises a hydraulic motor RA operable to drive a drive roller A, and a second idle roller B. A tyred wheel of the vehicle rests in use of the apparatus on the two rollers A and B, the wheel being acted upon by the roller A and to a lesser extent roller B as described hereinafter. A third roller C functions as a measuring roller in use contacting the tyre and is mounted between rollers A and B. Wheel movements cause this roller to move laterally, the movement being detected by measuring apparatus (see Figure 7). The hydro-motor together with the roller A and its mountings is disposed upon a slide SA movable longitudinally with respect to the axis of rotation of the roller A by means of a hydraulic ram TA. The sliding member SA is slidably mounted on a second sliding member SA2 which also mounts the hydraulic ram TA. Roller B is also mounted for longitudinal movement on a similar slide SB movable by a ram TB. The sliding member SB is slidably mounted on a second sliding member SB2, which also mounts the ram TB. The measuring roller C is also movable axially under the influence of a wheel, though mounting means for this is not shown. The slides SA2 and SB2 are also movable by a ram LAB, via toothed racks TR1 TR2 and TR3, at right angles to the axis of rotation of roller A, operation of the ram LAB in one direction causing slides SA2 and SB2 and thus rollers A and B to move further apart, and in an opposite direction causing them to move closer together. Roller C is maintained in a central position (see Figure 7) by two springs P1 and P2 with appropriate known characteristics. A potentiometer PO is mechanically connected to measuring roller C and electrically to a digital measuring instrument MO. The hydraulic motor RA, rams SA, SB, TA, TB and LAB are preferably driven by an electro hydraulic unit E but may be driven by pneumatic or electrical machines. An hydraulic measuring device M1 (M2 in assembly 2) is provided in the hydraulic feed line to the hydraulic motor RA (RA').

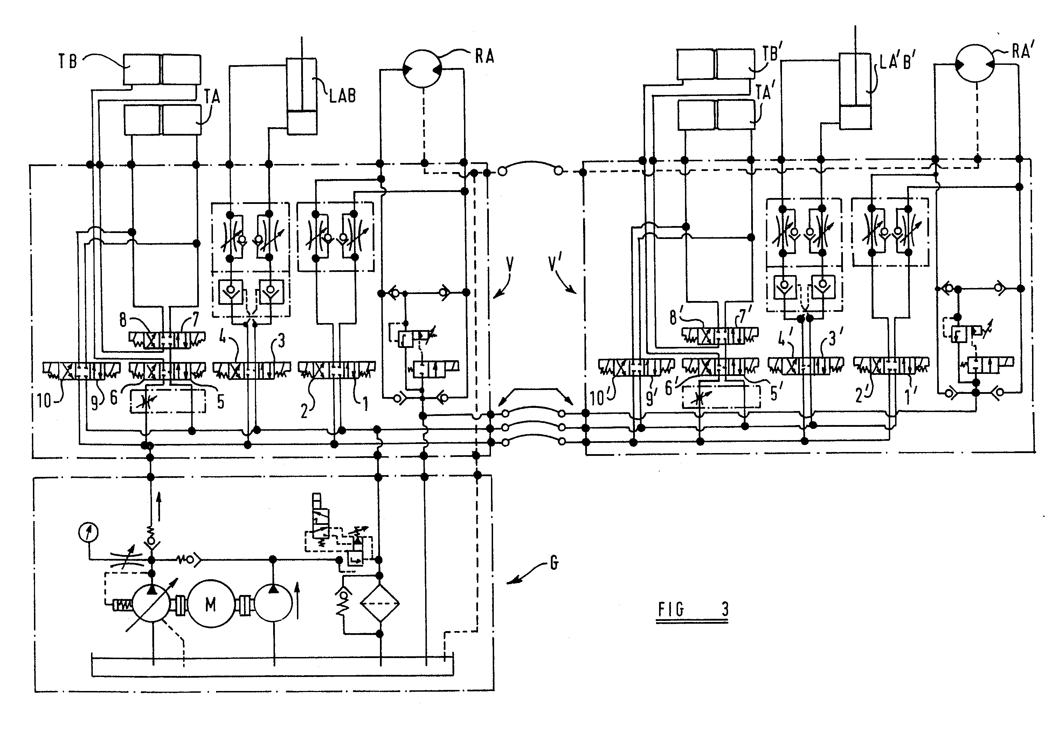

Referring now to Fig 3, the electrohydraulic unit E comprises an hydraulic pump unit G for the supply and discharge of hydraulic fluid to the various control mechanisms ie. hydraulic motors RA and RA' rams LAB, LA'B',SA, SA', SB, SB' TB, TB' and TA, TA'. The hydraulic operation of these elements is carried out by means of valve systems V and V' with valves carrying the reference numbers 1 to 10 inclusive and 1' to 10' inclusive for assembly 1 and assembly 2 respectively. The operation of the electrohydraulic circuitry shown in Figure 3 will be apparent to those skilled in the art of hydraulic machines.

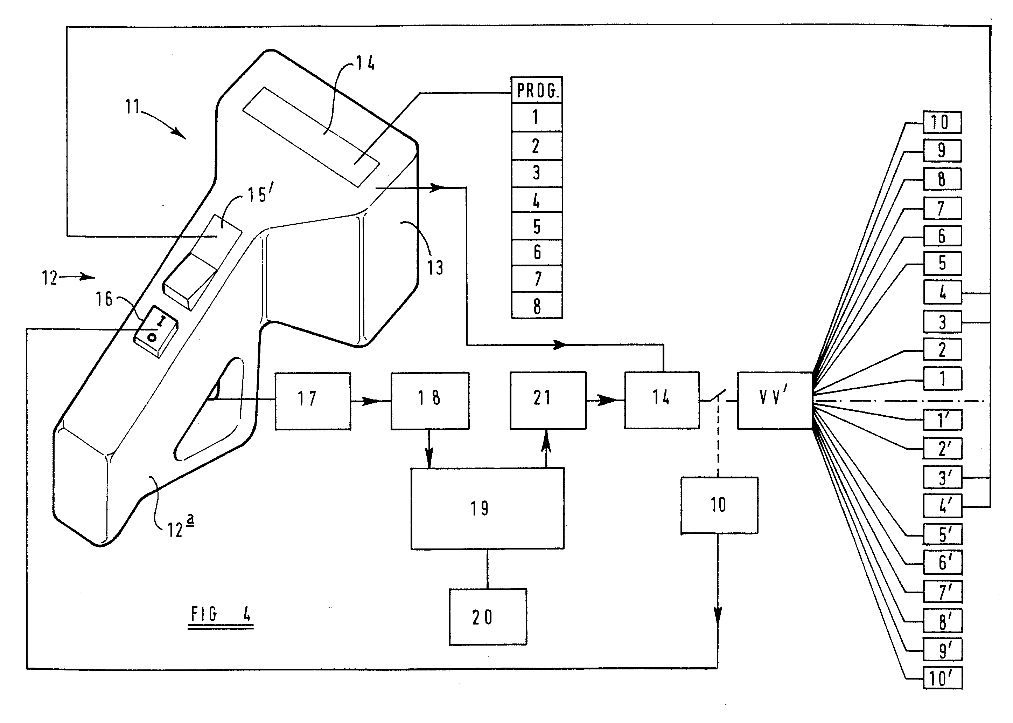

Figure 4 depicts a remote control module 12 and also a block diagram of a control system for the operation of various elements of the device by means of the said module. The module 11 comprises a handle 12a and a pulse emitter 13. A program selection display screen 14 is provided and the handle 12a is equipped with three switches, an "open-closed-open" switch 15, a start/stop switch 15 and selector switch 17. the display 14 comprises an alpha numeric LED display to indicate the choice of various operation cycles for the apparatus. The switch 17 is operatively connected to a microprocessor 19 through an interface 18, the microprocessor having a memory 20. Pulses generated by the pulse emmiter 13 are fed into the microprocessor under control of the switch 17 and are there operable to energise a program of valve operations under control of the microprocessor, via an output interface 21, and under control of switch 16. The particular program in operation being indicated on the display 14. The switch 15 is operable to control valves 3,4, 3', 4' which operate the rams LAB and LA'B' preferably the electronic circuitry is arranged such that the numbers of programs available are indicated on the display 14 cyclically, acceptance of a particular program displayed being indicated by operation of the switch 17 whereupon the microprocessor operates to initiate the sequence of valve operations in accordance with the chosen program provided that switch 16 is closed. The switch 15 may be operated to adjust the spacing between the rollers A and B or A' and B'. It will be noted in relation to Figure 3 that valves V1, and V2 control the hydraulic motor RA, valves V3, and V4 control the opening and closing of the distance between the rollers A, and B, and the valves 5 to 10 inclusive control the flow of fluid to rams SA, SB, TA, and TB.

It is to be understood that the mode of operation of the module 12 relative to the microprocessor may be arranged in any convenient manner, a single pulse or a chain of pulses being used as appropriate to convey the commands of a user of the module to the microprocessor for the control of the apparatus.

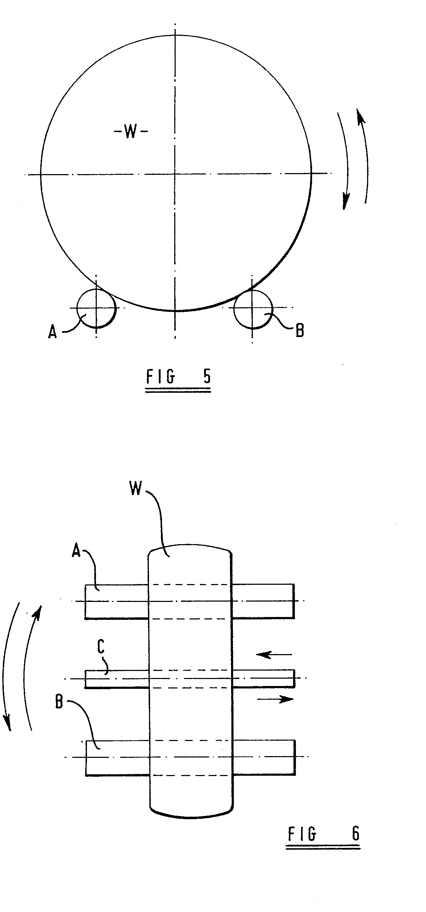

Test One - Tyre Inspection (See Figure. 5, which is a schematic side elevational view showing parts of assembly 1).

Rollers A, B, A' and B' are utilised. The wheels are mounted on rollers A, B and A', B' and are rotated slowly (4 to 5 RPM) by roller A or A' in one direction and then in an opposite direction. The whole of each tyre tread and sidewall may thus be inspected for wear or damage without the need to lift the vehicle. The wheels may be tested singly but are preferably tested in pairs.

Test Two - for Obliqueness of Wheels (See Figure. 6, which is a schematic view showing part of assembly 1)

All the rollers, ie. rollers A, B, A', B', C and C' are utilised. The wheels are rotated slowly (4 to 5 RPM) by rollers A, A' first in a forward direction. The rotation is stopped after about one metre has been run and the direction reversed. Any displacement of rollers C, C' in either direction by the wheels is noted and is indicative that the wheel is not properly aligned possibly due to deformation or incorrect alingnment of cross shafts or cross members causing scuffing of the tyre or tyres. The wheels may be tested singly but are preferably tested in pairs.

Test Three - for Tyre Wear (See Figure 7, which is schematic plan view showing part of assembly 1)

All the rollers are utilised. The wheels are rotated x revolutions in one direction and then x revolution in an opposite direction with the measuring rollers C and C' against the underside of the tyres which are able to move about a substantially vertical axis as shown in figure 7 by arrows Y. The axial displacement of rollers C, C' by the tyres is a function of the shearing force exerted by the tyre of the wheel during turning. By measuring the axial displacement with the potentiometer PO as recorded by measuring instrument MO the shearing force, which is a reflection of tyre wear can be evaluated.

Test Four - Vertical Play of Wheels/Suspension (see Figure 8, which is a schematic plan view showing parts of assemblies 1 and 2)

All the rollers are utilised. The axle or axles of an opposed pair of wheels of the vehicle are supported so that the pair of wheels to be tested do not transmit any substantial amount of the weight of the vehicle. The axle or axles are lifted to the extent that the tyres just touch the rollers. The wheels are rotated in the same direction by rollers A, A' whilst the rollers A, B for the left hand wheel are moved (by rams and SA and TA) axially in a direction Y1 opposite to the direction Y1' of movement of rollers A' B'. Any slack in the wheel mountings will result in movement of the rollers C and C' in the same directions as rollers A, B and A' B' respectively, due to the wheels being inclined relative to a substantially vertical plane. The directions of axial movement are then reversed (Y2 and Y2') The extreme value of the displacement of rollers C and C' is a measure of the inclination of the wheels and excessive play indicates wear in the wheel mountings. This test method is particularly suitable for wheels having tyres which have relatively stiff side walls such as commercial vehicle tyres. Where the tyres have relatively pliable side walls (such as automobile tyres) some of the displacement will in fact be caused by deflection of the tyre walls rather than mis-alignment of the wheels. This test is therefore more suitable for commercial vehicle wheels.

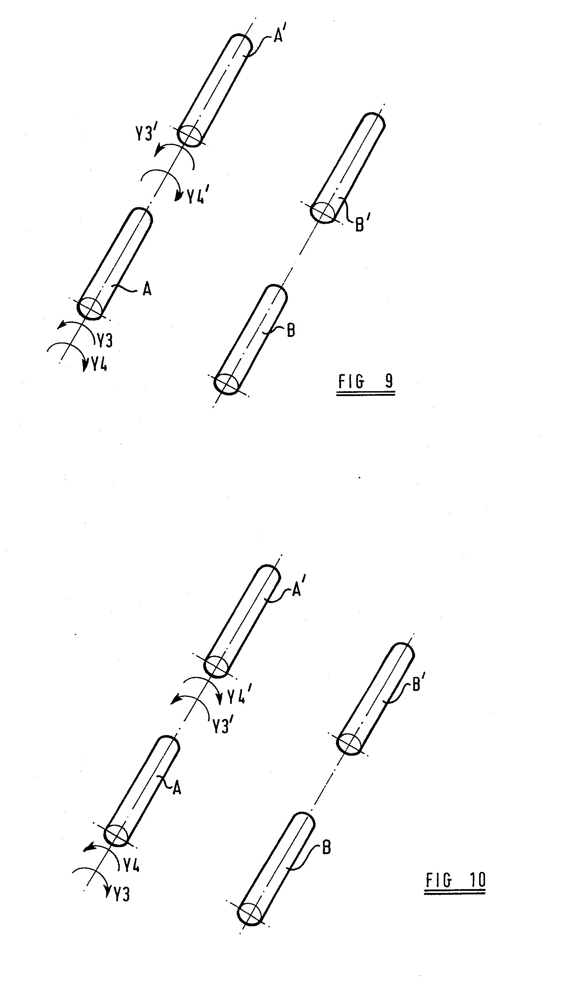

Test Five - Wheel and Brake Components (See Figure. 9, which is a isometric shcematic view, not to scale, showing parts of assemblies 1 and 2).

Rollers A, B, A' and B' are utilised.  The wheels are subjected to a pulsating movement by rotating them by a small amount firstly in one direction Y3, Y3' and then in an opposite direction, Y4, Y4' the degree of rotation is slight, ie. about 20°.  The vehicle brakes are applied during the test.  Any excessive play in for example the fixing of the wheels to their hubs or wheel brake parts, the fixing of springs on their axles or on a sub-frame on the body, track rods or radius arms and the like will result in a hysteresis effect between the movement of rollers and the opposed movement of the wheels or brake parts etc.  In a first test (Figure 9) rollers A and A' are rotated in the same direction and in a second test (Figure 10) a torsion effect is achieved by rotating rollers A and A' in opposite directions for each cycle.  The latter is useful for testing the same items as mentioned above but also for testing the fixing of stabilisers, shock absorbers and the like.  The maximum forces exerted on the wheels for automobiles will be in the region of 300kg and for heavy commercial vehicles approximately 600kg.

Test Six - Slewing Motion(No Figure)

All the rollers are utilised.  In this test each wheel is tested separately and then pairs of wheels tested together.  Taking the left hand wheel first roller A rotates the wheel at a suitable speed whilst roller A and roller B are moved in opposite directions.  The rollers being displaced a maximum of about 20mm and when reaching their maximum displacement the direction of axial movement of each roller is reversed.  This cycle is continued and any play detected by roller C indicates a possible fault in steering box mountings, steering points joints, steering linkages and axle mountings such as king pins. The proceedure is repeated for the right hand wheel and then for both wheels. In the latter case rollers A and A' would move axially in the same direction, say the left, whilst B and B' move to the right and then, as stated above, at maximum displacement all the directions would change. The maximum transverse forces exerted on the wheels for automobiles will be in the region of 300 Kg and for heavy commercial vehicles approximately 600 Kg.

Test seven - Inter-wheel link tests (See Figure. 11, which is a schematic plan view not to scale showing parts of assemblies 1 and 2).

All the rollers are utilised. In a first part of the cycle the wheels are rotated whilst rollers A and B' move in one direction (Y5) and rollers A' and B move in an opposite direction (Y6), then at maximum displacement the direction of axial movement of all the rollers is changed (not shown in Figure 11). Any excessive displacement is detected by rollers C and C', is an indication that links between wheels are subject to wear.

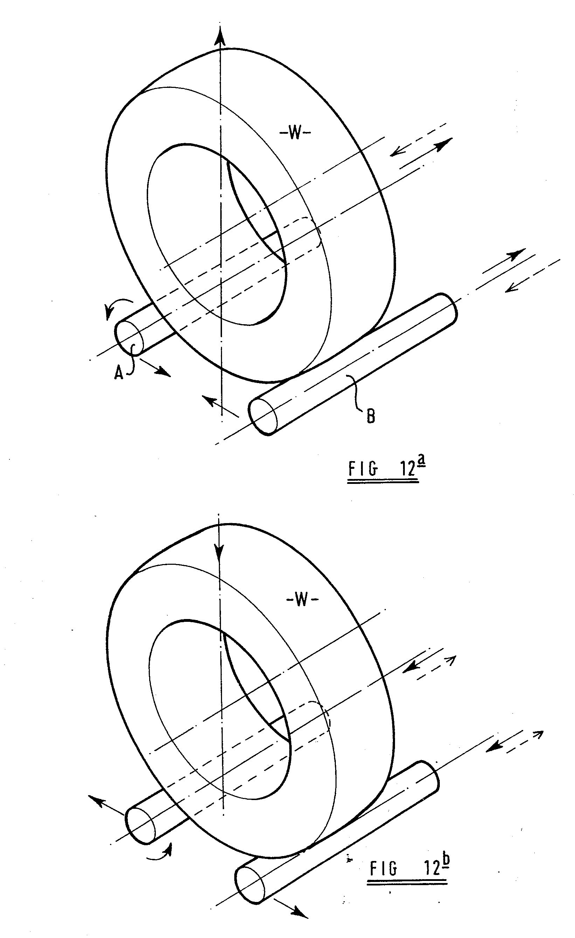

Test eight - Vertical and Sideways movements of Wheels (See Figures 12a - 12 d)

All the rollers are used, the wheels being tested separately. A test for the left hand wheel will be described, the test is then repeated in similar manner for the right hand wheel of an axle. The method of testing is different for vehicles which have independent suspension as opposed to vehicles which have non-independent suspension. For the right hand wheel of an independent suspension vehicle the wheel is placed between rollers A and B with the distance between the rollers set to a maximum. A jack is then applied to the axle R for that wheel and the jack is raised such that the wheel only just touches the rollers.

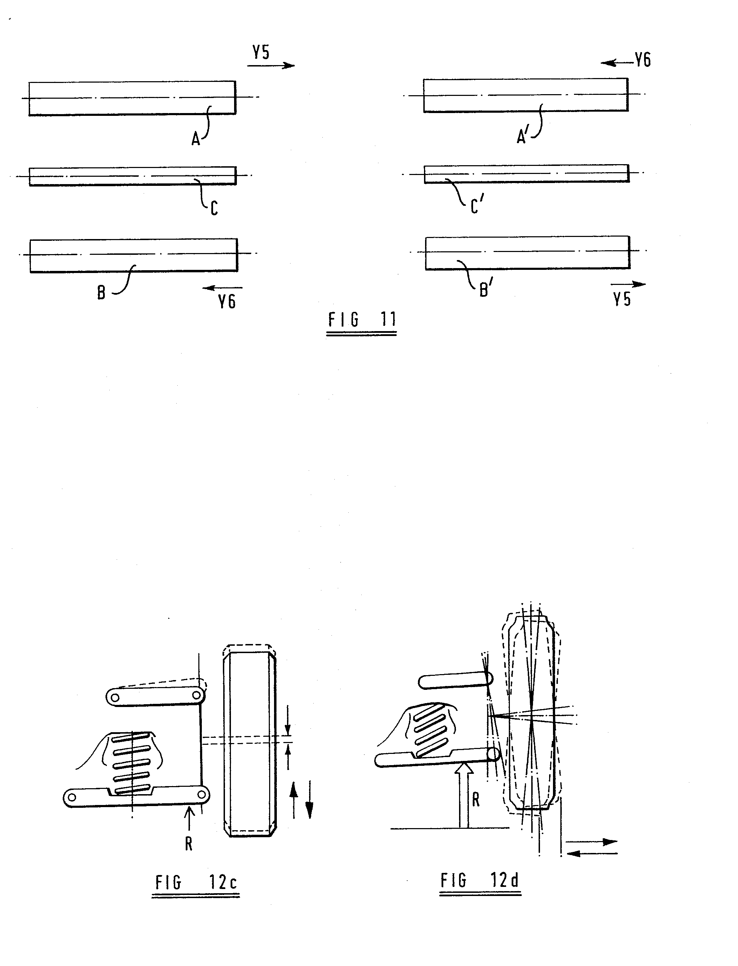

The rollers A and B are moved in the same axial direction whilst also moving towards one another the transverse movement increasing as the rollers approach one another (see Figure 12a which is a schematic perspective view showing part of assembly 1). The process is then reversed so that as the rollers move apart the opposite transverse axial motion is utilised in a decreasing manner (see Figure 12 similar to Figure 12a). · This cycle is then repeated. The presence of excessive play is indicative of possible wear in ball bearings, king pins, suspension arms and the like. Typical forces to be applied for automobiles are approximately 250 Kg. For vehicles with rigid axles for example heavy vehicles, a wheel to be tested is placed between rollers A and B at their maximum spacing apart, the rollers A and B are then brought together effectively lifting the wheel and the axle. An axle stand is then positioned under the axle and the rollers A and B are moved apart until the wheel just touches the tyre. A transverse axial movement and movement of the rollers towards one another and apart is effected as in the previous case. Throughout the test for both types of vehicle the roller A rotates the wheel. The test may be commenced with the rollers A and B in a central position axially, ie. such that they may be displaced axially in either direction from the outset, or alternatively with rollers A and B initially in an extreme axially displaced position, whichever is preferred. The respective axial and radial play detected by this test are shown schematically in Figures 12c and 12d which are front views of portions of an independent suspension system jacked at R.

It is to be understood that the foregoing tests are merely examples of test methods which can be carried out on apparatus according to the invention and do not limit the invention in any way. Other test methods utilising the apparatus according to the invention will be apparent to those skilled in the art.

Various modifications may be made within the scope of the invention. For example, the rollers may be rotated by pneumatic or electric motors, and the slides SA and SB may be moved not by hydraulic rams as in the present example but by any convenient means whether pneumatic, electric or otherwise. The apparatus may be programmed to carry out any suitable cycle of testing regimes one after another or any given sequence by appropriate programming of the microprocessor. The microprocessor may form part of a micro computer associated with the apparatus. Alternatively the apparatus may be controlled by manual switching without the use of a microprocessor.

CLAIMS:

1. A method of testing or inspecting vehicle wheels and elements of the vehicle directly or indirectly linked to said wheels, characterised by the steps of turning a wheel of a vehicle to be tested whilst moving a base region of the wheel in a direction substantially parallel to the axis or rotation of the wheel and/or a direction at right angles to the said axis and observing the effect of said movement on said wheel and/or on said elements(s) to detect wear or misalignment

2. A method as claimed in Claim 18 characterised in that the wheel rests on rollers and is rotated by a roller (A) and said movement is carried out by moving at least one the said rollers in at least one of the said directions

3. Test apparatus for use in the method of claim 1 or claim 2, the apparatus being characterised by roller means (1) including at least one roller (A), the roller means being operable to turn at least one wheel of a vehicle under test, and means (TA, SA, RA, TR, LAB) for moving at least a part of said roller means in at least one direction transversely and/or longitudinally of the axis of rotation of said roller.

4. Test apparatus as claimed in claim 3 characterised by a pair of assemblies (1, 2,) an assembly being provided for respective opposed wheels at each side of the vehicle, the assemblies being arranged to be operable either independently of each other or in conjunction with one another.

5. Test apparatus as claimed in claim 3 or 4 characterised in that the or each assembly includes a pair of rollers (A, B), which support, in use, the tyred surface of a wheel, the rollers being rotatable about axes which are substantially parallel to each other and generally parallel to the axis of rotation of a wheel of a vehicle under test, one of the rollers (A) being rotatable by drive means (RA).

6.   Test apparatus as claimed in Claim 5 characterised in that the rollers are each mounted for rotation on a respective first sliding member (SA) the first sliding member (SA) for the drivable roller (A) also mounting the drive means (RA) for that roller.

7.   Test apparatus as claimed in claim 6 characterised in that the first sliding members (SA) are mounted on respective second sliding members (SA2,) either the first or the second sliding members being slidably movable in a direction parallel to the axis of rotation of the drivable roller (A), the other of the first or second sliding members being movable in a direction at right angles to said axis.

8.   Test apparatus as claimed in claim 7 characterised in that the first sliding members (SA,) are slidable in a direction parallel to said axis by respective fluid powered rams, (TA,) mounted on the respective second slidable members (SA2,).

9.   Test apparatus as claimed in claim 7 or claim 8 characterised in that the second sliding members (SA2,) are arranged to be movable towards and away from each other.

10.  Test apparatus as claimed in claim 9 characterised in that the said second sliding members (SA2) are movable towards and away from each other by at least one fluid powered ram (LAB)

11.  A test apparatus as claimed in claim 10 characterised in that the or each said fluid powered ram (LAB) acts on the second sliding member (SA2) through the agency of a rack and pinion arrangement (TR1, TR2, TR3).

16

0124258

12. Test apparatus as claimed in any of claims 8 to 11 characterised in that the drive means for the drivable roller is a fluid powered motor (RA) and said fluid powered rams (SA, TA, LAB) and motor (RA) are activated by fluid governed by valves (V1', V10) under the control of a programmable electronic device (18, 19, 20, 21,).

13. Test apparatus as claimed in claim 12 characterised in that the programmable electronic device includes control means (12) operable by a user of the apparatus and by which one or more programs comprising sequences of operation of at least some of the fluid powered rams (SA, TA, LAB)and fluid powered motor (RA) may be selectively activated, the sequences being controlled by instructions and/or data stored in a memory (20) forming part of said device.

14. Test apparatus as claimed in claim 13 characterised in that at least one of said sequences of operation includes provision for cyclic operation of one or more of the fluid powered rams (SA, SB, LAB) or motor (RA).

15. Test apparatus as claimed in any of claims 5 to 14 characterised in the reaction means (M1) are provided for measuring the resistance to rotation of a wheel by said drivable roller (A).

16. Test apparatus as claimed in claim 15 characterised in the said reaction means (M1) comprises a device for measuring the pressure of working fluid supplying said drive means (RA).

17. Test apparatus as claimed in any of claims 3 to 16 characterised by a third roller (C) for the or each assembly (1,2), the third roller (C) being rotatable about an axis substantially parallel to the axis of rotation of the durable rollers (A) and being axially displaceable and arranged so as to contact, in use, the tyre contacting the other rollers (A, B).

0124258

18. Test apparatus as claimed in claim 17 characterised by indicator means (PO, MO) for indicating the degree of axial displacement of the third roller from a given point.

19. Test apparatus as claimed in claim 16 characterised in that the indicator means comprises a potentiometer (PO) operable by axial displacement of the third roller from the given position into which the third roller is urged by a pair of resilient members (P1, P2).

FIG 1

FIG 2

0124258

FIG 3

FIG 4

FIG 5

FIG 6

FIG 7

FIG 8

7/9

0124258

FIG 9

FIG 10

Y5 →

A

C

B

← Y6

← Y6

A'

C'

B'

Y5 →

FIG 11

FIG 12c

R

FIG 12d

R

FIG 12ᵃ

FIG 12ᵇ